# EUROPÄISCHE PATENTSCHRIFT

(11) **EP 2 326 551 B1**
(45) Veröffentlichungstag und Bekanntmachung des Hinweises auf die Patenterteilung: **16.05.2012**
(21) Anmeldenummer: 09778058.9
(22) Anmeldetag: 22.08.2009
(51) Int. Cl.: B63B 29/16, B63B 17/00

(54) **VORRICHTUNG ZUR ABWASSERAUFBEREITUNG**
APPARATUS FOR THE TREATMENT OF WASTEWATER
DISPOSITIF DE TRAITEMENT D'EAUX USEES

(30) Priorität: 12.09.2008 DE 102008046913
(43) Veröffentlichungstag der Anmeldung: 01.06.2011
(73) Patentinhaber: Hamann AG, 21279 Hollenstedt (DE)
(72) Erfinder: HAMANN, Knud, 21279 Appel (DE)
(74) Vertreter: Hauck Patent- und Rechtsanwälte
(86) Internationale Anmeldenummer: PCT/EP2009/006109
(87) Internationale Veröffentlichungsnummer: WO 2010/028743

(56) Entgegenhaltungen:
- EP-A2- 1 726 521
- US-A- 3 624 665
- US-A- 3 974 528
- US-A- 4 115 876
- US-A- 5 711 038

## Beschreibung

Die Erfindung bezieht sich auf eine Vorrichtung zur Abwasseraufbereitung, insbesondere auf Booten, nach dem Patentanspruch 1.

Es ist vorgeschrieben, dass Abwässer von Schiffen und Booten nicht unaufbereitet ins Meer geleitet werden dürfen. Es sind daher für Schiffe und auch für Boote diverse Vorrichtungen zur Abwasseraufbereitung bekannt geworden. Eine derartige Vorrichtung ist etwa in DE 100 10 610 C2 beschrieben. Die bekannte Vorrichtung weist einen Behälter oder Tank auf, der in zwei Bereiche unterteilt ist, nämlich in einen Aufnahme- und einen Separationsbehälter. Beide Behälter sind durch eine Wand getrennt, die beidseitig einen seitlichen Spalt zwischen den Behältern bildet, um größere Feststoffe in dem Aufnahmebehälter zurückzuhalten. Der Auslass des Aufbereitungsbehälters ist über eine Pumpe und ein Hackwerk wiederum mit sich selbst verbunden, um eine Zerkleinerung von Feststoffen und Vermischung mit einem Desinfektionsmittel vorzusehen, insbesondere sind an dem Aufbereitungsbehälter ein Anschluss für Seewasser und einer für Desinfektionsmittel vorgesehen.

Aus dem Stand der Technik Dokument EP 1 726 521 A2 ist ebenfalls eine Vorrichtung zur Abwasseraufbereitung bekannt geworden, bei der im Aufbereitungsbehälter mehrere Sensoren angeordnet sind, welche den Füllstand im Aufbereitungstank prüfen. Das Abwasser wird von einem Speicherbehälter mittels Pumpe in den Aufbereitungstank geleitet, der auch mit Seewasser über eine Pumpe gespeist werden kann. Eine weitere Pumpe dient zur Dosierung eines Desinfektionsmittels, und eine Mazerationspumpe führt das aufbereitete Abwasser im Kreislauf, wobei mit Hilfe eines Drei-Wege-Ventils das aufbereitete Abwasser über Bord geleitet werden kann.

Der Erfindung liegt die Aufgabe zugrunde, eine Vorrichtung zur Abwasseraufbereitung zu schaffen, mit der eine besonders wirksame Aufbereitung innerhalb kurzer Zeit erzielt werden kann.

Diese Aufgabe wird durch die Merkmale des Patentanspruchs 1 gelöst.

Bei der erfindungsgemäßen Vorrichtung ist im Abstand zum oberen Einlass im Aufnahmeabschnitt eine Leitwand angeordnet, die mit Abstand oberhalb eines Sumpfs endet. Das eintretende Abwasser wird dadurch zunächst in Richtung Sumpf gelenkt. Auf diese Weise wird bereits eine große Menge von Feststoffen im Sumpf abgeschieden. Das Abwasser wird unterhalb der Leitwand in den Aufnahmebehälter zurück gelenkt und gelangt über einen Überlauf in einen Zwischenbehälter mit vorzugsweise schräger Seitenwand, deren Neigung in Richtung des Aufnahmebehälters verläuft. Die Trennwand ist beweglich gelagert, über welche in offener Stellung sich im Zwischenbehälter abgesetzte Feststoffe in den Sumpf bewegen können. Eine zum Aufbereitungsbehälter hin gelegene weitere Wand ist mit einem weiteren Überlauf versehen, über den dann das Abwasser in den Aufbereitungsabschnitt gelangt. Dort wird es mit Seewasser versetzt und mit einem geeigneten Desinfektionsmittel, z.B. Chlor, desinfiziert.

Nach einer Ausgestaltung der Erfindung liegt die untere Kante des zweiten Überlaufs etwas oberhalb der unteren Kante des ersten Überlaufs.

Nach einer anderen Ausgestaltung der Erfindung ist der Sumpf trichterförmig ausgebildet, so dass in dem Aufnahmeabschnitt die Feststoffe auf einfache Weise in den Sumpf eingetragen und von diesem weiter befördert werden können.

Bei einer anderen Ausgestaltung der Erfindung ist die weitere Wand schräg nach unten ausgebildet, so dass Feststoffe in dem Zwischenbehälter an dieser Wand entlang rutschen können in Richtung Sumpf und in diesen gelangen, wenn die Klappe geöffnet wird. Die Klappe ist vorzugsweise durch Schwerkraft und hydrostatischen Druck des Mediums in Schließstellung vorbelastet.

Nach einer anderen Ausgestaltung der Erfindung ist der erste Überlauf von mindestens einem U-förmigen Rohrabschnitt gebildet, dessen Enden nach unten gerichtet sind. Von besonderer Bedeutung ist, dass der Überlauf in den Zwischenbehälter eine Strömung nach unten erzeugt, so dass die Strömung gezwungen ist, in den unteren Bereich des Zwischenbehälters zu strömen und nach oben zum Überlauf zum Aufbereitungsabschnitt umzukehren.

Im Aufbereitungsabschnitt ist mindestens ein Sensor angeordnet, der mit einer Steuerung für die erfindungsgemäße Vorrichtung verbunden ist, welche die einzelnen Pumpen und Ventile nach Maßgabe eines vorgegebenen Programms steuert. Der Sensor stellt fest, wenn Abwasser zuläuft, um, was an sich bekannt ist, Seewasser und ein Desinfektionsmittel zuzugeben, beispielsweise Chlor. Bei der erfindungsgemäßen Vorrichtung kann im Übrigen das aufbereitete Abwasser über einen Mischer und eine Mazerationspumpe, um noch vorhandene Feststoffe zu verkleinern, umgewälzt werden.

Der Zulauf zum Aufnahmeabschnitt erfolgt über eine Pumpe, wobei vorzugsweise ein Vorbehälter vorgesehen ist, in den das auf dem Boot anfallende Abwasser eingetragen wird.

Ein Ausführungsbeispiel der Erfindung wird nachfolgend anhand von Zeichnung näher erläutert.
- Fig. 1: zeigt perspektivisch schräg von oben einen Behandlungstank einer Vorrichtung nach der Erfindung.
- Fig. 2: zeigt eine Draufsicht auf die Darstellung nach Figur 1.
- Fig. 3: zeigt einen Schnitt durch die Darstellung nach Figur 2 entlang der Linie 3-3.
- Fig. 4: zeigt die eine Endansicht des Behandlungstanks nach Figur 1 mit angebauten Aggregaten.
- Fig. 5: zeigt die Seitenansicht der Darstellung nach Figur 5.
- Fig. 6: zeigt ein Schaltschema für die Vorrichtung nach den Figuren 1 bis 5.

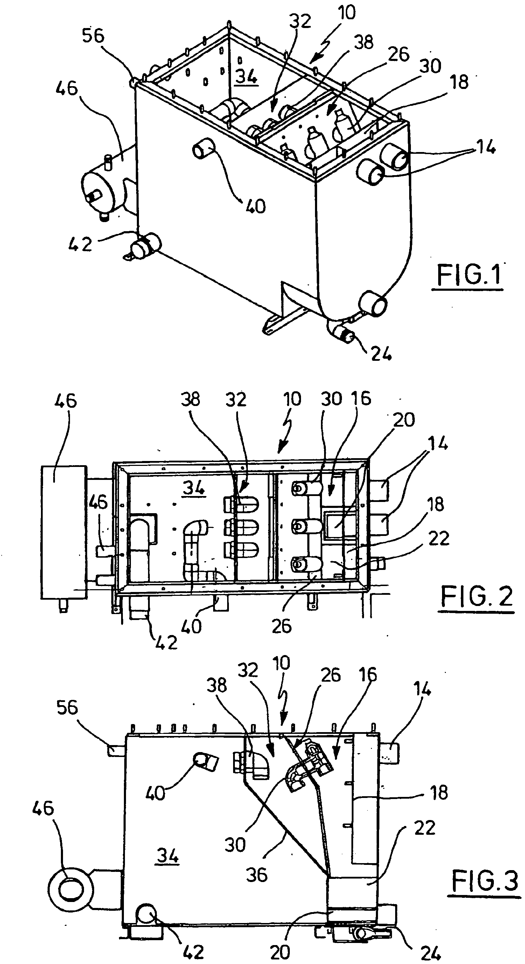

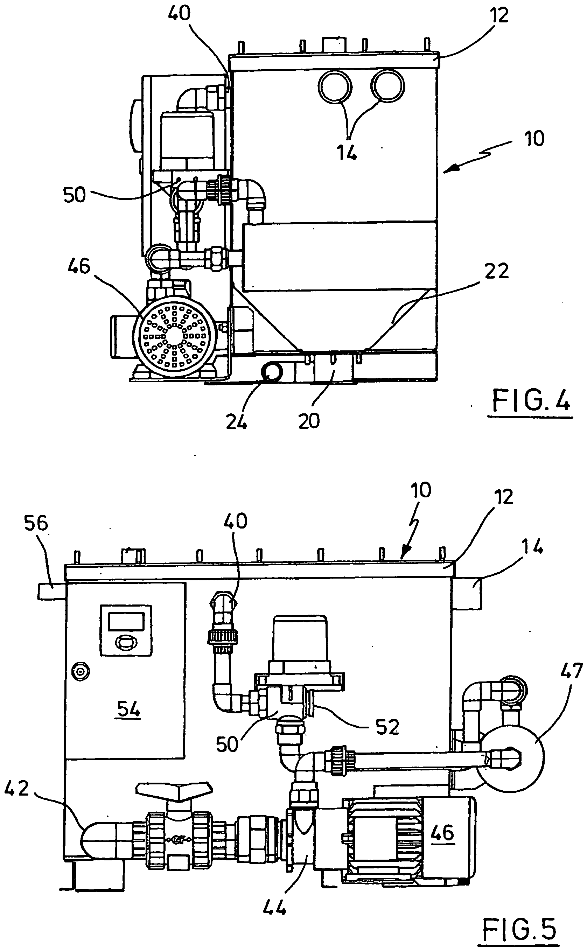

In den Figuren 1 bis 5 ist ein Behandlungstank 10 dargestellt, der in den Figuren 1 bis 3 oben offen und in den Figuren 4 und 5 von einem Deckel 12 geschlossen ist. Der Behandlungstank ist im Wesentlichen quaderförmig.

An dem in den Figuren 1 bis 3 rechten Ende sind zwei Zuläufe 14 für Abwasser im oberen Endbereich angeordnet. Sie sind mit einem Aufnahmeabschnitt 16 im Behandlungstank 10 verbunden. Parallel und im Abstand zur Endwand des Behandlungstanks 10 ist eine Leitwand 18 angeordnet, die mit Abstand oberhalb des Bodens des Behandlungstanks 10 endet. Unterhalb der Leitwand 18 ist ein Sumpf 20 angeordnet. Das über die Einlässe 14 einströmende Abwasser trifft auf die Leitwand 18 und wird nach unten gelenkt. Am unteren Ende der Leitwand kann es dann umkehren und nach oben in den Aufnahmeraum 16 strömen. Zum Sumpf 20 hin sind Schrägflächen 22 geformt, welche eine Art Trichter bilden in Richtung zum Sumpf 20. Der Sumpf 20 ist mit einem Anschluss 24 verbunden, über den Feststoffe abtransportiert werden können. Im Abstand zur Leitwand 18 ist zur Begrenzung des Aufnahmeraums 16 eine Trennwand 26 im Behandlungstank 10 angeordnet, die als Klappe ausgebildet ist, die nach rechts aufschwenken kann. Die Klappe ist leicht schräg angeordnet, so dass sie durch Schwerkraft in Verbindung mit dem hydrostatischen Druck des gefüllten Aufnahmeraums 16 in die in Figur 3 gezeigte Schließstellung vorbelastet ist. Im oberen Bereich der Trennwand 26 sind drei U-förmige Rohrstücke 30 derart angeordnet, dass sie mit schräg nach unten weisendem Austritt für einen Überlauf der Flüssigkeit vom Aufnahmeabschnitt 16 zu einem Zwischenbehälter 32 sorgen, der von einem größeren Aufbereitungsabschnitt 34 durch eine Wand 36 getrennt ist. Die Wand 36 erstreckt sich im unteren Bereich schräg nach unten in Richtung Wand 26, so dass zwischen diesen ein im Schnitt dreieckförmiger Teil gebildet ist. Feststoffe können entlang der Wand 36 nach unten rutschen und bei geöffneter Wand 26 zum Sumpf 20 gelangen.

Im oberen vertikalen Bereich der Wand 36 sind drei beabstandete winklige Rohrstücke 38 angeordnet als Überlauf in den Aufbereitungsabschnitt 34 angeordnet. Die untere Kante des Überlaufs 38 liegt etwas oberhalb der unteren Kante des durch die Rohrstücke 30 gebildeten Überlaufs.

In Figuren 1 bis 3 ist im unteren hinteren Bereich des Aufnahmeabschnitts 34 ist ein Auslass 42 zu erkennen und im oberen Bereich ein Einlass 40, auf den noch weiter unten eingegangen wird.

Der Auslass 42 ist, wie in Figur 5 zu erkennen, über eine Mazerationspumpe 44, die von einem Motor 46 angetrieben ist, und einen Wirbelmischer 47 verbunden, von dem aus Flüssigkeit zurück in den Einlass 40 geleitet wird. In der Verbindung zum Einlass ist ein Drei-Wege-Ventil 50 angeordnet, dass diese wahlweise mit einem Austritt 52 verbindet, über den aufbereitetes Abwasser über Bord geleitet werden kann.

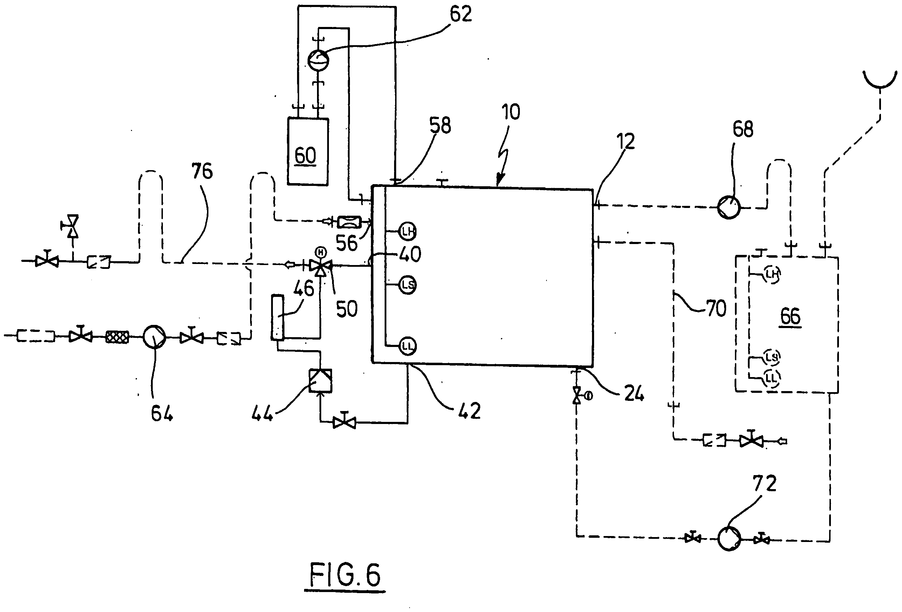

Außen am Behandlungstank 10 ist ein Gehäuse oder ein Klemmkasten 54 für eine elektrische Verbindung zur Steuervorrichtung angeordnet, die nachfolgend anhand von Figur 6 kurz erläutert werden soll.

Es sei noch erwähnt, dass über einen Einlass 56 Seewasser in den Aufbereitungsabschnitt 34 geleitet werden kann und über einen Einlass 58 ein Desinfektions-mittel, z.B. Chlor.

In Figur 6 ist ein Reservoir 60 für ein Desinfektionsmittel dargestellt, das über eine Dosierpumpe 62 in den Behandlungstank 10 geleitet wird. Eine Pumpe 64 fördert Seewasser über eine entsprechende Leitung über den Einlass 56 in den Aufbereitungsabschnitt 34.

Aus einem Auffangtank 66 für Abwasser fördert eine Pumpe 68 Abwasser zu den Einlässen 12. Über eine Leitung 70 kann Frischwasser in den Aufnahmeabschnitt 16 geleitet werden. Eine Schlammpumpe 72 fördert Schlamm aus dem Sumpf 20 und über den Auslass 24 zu dem Behälter 66. Mit dem Drei-Wege-Ventil 50 ist eine Leitung 74 verbunden, um aufbereitetes Wasser über Bord zu leiten.

Die gezeigten Pumpen und Ventile werden durch die nicht weiter dargestellte Steuerung, die mit dem Klemmkasten 54 (Figur 5) verbunden ist, gesteuert.

Im Betrieb wird eine bestimmte Menge Abwasser entweder mit Hilfe der Pumpe 68 oder durch Schwerkraft in den Aufnahmeabschnitt 16 geleitet, und zwar über die Einlässe 14. Das einströmende Abwasser strömt gegen die Leitwand 18 und wird dadurch nach unten gezwungen in Richtung Sumpf 20, so dass bereits eine große Menge Feststoffe sich im Sumpf 20 absetzen kann. Anschließend wird die Strömung um die Leitwand 18 nach oben gelenkt in den Aufnahmeabschnitt 16 hinein. Mit Hilfe der Überläufe 30 wird dann das oberhalb der Überläufe stehende Wasser in einen Zwischenbehälter 32 gelenkt, wobei die Strömung nach unten gerichtet ist in den Bereich hinein, der durch die Wand 26 und die Wand 36 gebildet ist. Dadurch werden weitere Feststoffe abgeschieden und gelangen bei geöffneter Klappe ebenfalls in den Sumpf 20. Über den Überlauf 38 wird weitgehend von Feststoffen befreite Flüssigkeit in den Aufbereitungsabschnitt 34 gelenkt, wobei ein nicht gezeigter Sensor feststellt, ob Flüssigkeit im Aufbereitungsabschnitt 34 ist. Ist dies der Fall, wird über die Pumpe 64 Seewasser in den Aufbereitungsabschnitt 34 eingetragen und mittels der Dosierpumpe 60 z.B. Chlor in diesen Abschnitt eingeführt. Die Mazerationspumpe 44 sorgt für einen Umlauf der Flüssigkeit aus dem Aufbereitungsabschnitt 34 über einen Wirbelmischer 46 und die Pumpe 44. Nach einer gewissen Zeit wird das Ventil 50 umgeschaltet und die Flüssigkeit aus dem Aufbereitungsabschnitt 34 wird über den Auslass 52 über Bord gelenkt.

Der beschriebene Zyklus für eine Charge Abwasser nimmt etwa sechs Minuten in Anspruch. Im Anschluss kann eine neue Charge Abwasser in den Aufnahmeabschnitt 16 eingebracht werden.

## Patentansprüche

1. Vorrichtung zur Abwasseraufbereitung, insbesondere an Bord von Booten, mit einem Behandlungstank, der einen Aufnahmeabschnitt und einen Aufbereitungsabschnitt aufweist, einem Einlass für Abwasser im Aufnahmeabschnitt, einem Auslass am Aufbereitungsabschnitt für aufbereitetes Abwasser, der über eine Mazerationspumpe mit einem Einlass für aufbereitetes Abwasser in den Aufbereitungsabschnitt zurück verbunden ist, wobei zwischen Aufnahmeabschnitt und Aufbereitungsabschnitt eine Trennwand mit Überlauf angeordnet ist, der Aufnahmeabschnitt einen Sumpf für Feststoffe aufweist und am Aufbereitungsabschnitt einen Anschluss für Seewasser und Desinfektionsmittel vorgesehen ist, **dadurch gekennzeichnet, dass** im Abstand zum oberen Einlass (14) im Aufnahmeabschnitt (16) eine Leitwand (18) angeordnet ist, die oberhalb des Sumpfes (20) endet und das eintretende Abwasser zunächst in Richtung Sumpf (20) lenkt, die Trennwand (26) mit einer an den Aufbereitungsabschnitt (34) angrenzenden Wand (36) einen Zwischenbehälter (32) bildet, in den das Abwasser über den Überlauf (30) eingetragen wird, wobei die weitere Wand (36) einen zweiten Überlauf (38) zum Aufbereitungsabschnitt (34) aufweist und die Trennwand (24) als Klappe ausgebildet ist, die in Offenstellung den unteren Bereich des Zwischenbehälters (32) mit dem Sumpf (20) verbindet.

2. Vorrichtung nach Anspruch 1, **dadurch gekennzeichnet, dass** die untere kante des zweiten Überlaufs (38) etwas oberhalb der unteren Kante des ersten Überlaufs (30) liegt.

3. Vorrichtung nach Anspruch 1 oder 2, **dadurch gekennzeichnet, dass** der Sumpf trichterförmig ausgebildet ist.

4. Vorrichtung nach einem der Ansprüche 1 bis 3, **dadurch gekennzeichnet, dass** die weitere Wand (36) nach unten schräg auf die Trennwand (28) zuläuft.

5. Vorrichtung nach einem der Ansprüche 1 bis 4, **dadurch gekennzeichnet, dass** die Trennwand als Klappe durch Schwerkraft in Verbindung mit dem hydrostatischen Druck des gefüllten Aufnahmeraums (16) in ihrer Schließstellung gehalten ist.

6. Vorrichtung nach einem der Ansprüche 1 bis 5, **dadurch gekennzeichnet, dass** der erste Überlauf von mindestens einem U-förmigen Rohrabschnitt (30) gebildet ist, dessen untere Enden nach unten gerichtet sind.

7. Vorrichtung nach einem der Ansprüche 1 bis 6, **dadurch gekennzeichnet, dass** der zweite Überlauf von mindestens einem winklige Rohrabschnitt (38) gebildet ist.

8. Vorrichtung nach einem der Ansprüche 1 bis 7, **dadurch gekennzeichnet, dass** im Aufbereitungsabschnitt (34) ein Sensor angeordnet ist, der feststellt, wenn sich eine bestimmte Menge Flüssigkeit im Aufbereitungsabschnitt (34) befindet zwecks Einleitung von Seewasser und/oder Desinfektionsmittel in den Aufbereitungsabschnitt (34).

9. Vorrichtung nach einem der Ansprüche 1 bis 8, **dadurch gekennzeichnet, dass** das eine Mazerationspumpe (44) mit Antriebsmotor (46), ein Wirbelmischer (46) sowie Rohrverbindungen außen am Aufbereitungsabschnitt (34) angebracht sind.

## Claims

1. An apparatus for the treatment of wastewater, in particular aboard boats, with a treatment tank, which has a receiving portion and a treatment portion, an intake for wastewater in the receiving portion, an outlet on the treatment portion for treated wastewater, which is connected back into the treatment portion via a maceration pump with an intake for treated wastewater, wherein a separating wall with overflow is arranged between the receiving portion and the treatment portion, the receiving portion has a sump for solids and a connection for sea water and disinfecting agent is provided on the treatment portion, **characterized in that** a guide wall (18) is arranged at a distance from the upper intake (14) in the receiving portion (16), wherein the guide wall (18) ends above the sump (20) and first directs the entering wastewater in the direction of the sump (20), the separating wall (26) with a wall (36) adjacent to the treatment portion (34) forms an intermediate reservoir (32), to which the wastewater is added via the overflow (30), wherein the other wall (36) has a second overflow (38) to the treatment portion (34) and the separating wall (24) is designed as a flap, which in the open position connects the lower area of the intermediate reservoir (32) with the sump (20).

2. The apparatus according to claim 1, **characterized in that** the lower edge of the second overflow (38) lies slightly above the lower edge of the first overflow (30).

3. The apparatus according to claim 1 or 2, **characterized in that** the sump is funnel-like.

4. The apparatus according to one of claims 1 through 3, **characterized in that** the other wall (36) approaches the separating wall (28) downward in a sloped manner.

5. The apparatus according to one of claims 1 through 4, **characterized in that** the separating wall as a flap is held in its closed position through gravitational force in connection with the hydrostatic pressure of the filled receiving area (16).

6. The apparatus according to one of claims 1 through 5, **characterized in that** the first overflow is formed by at least one U-shaped pipe portion (30), the lower ends of which point downward.

7. The apparatus according to one of claims 1 through 6, **characterized in that** the second overflow is formed by at least one angled pipe portion (38).

8. The apparatus according to one of claims 1 through 7, **characterized in that** a sensor is arranged in the treatment portion (34), which determines when a certain amount of liquid is located in the treatment portion (34) for the purpose of introducing sea water and/or disinfecting agent into the treatment portion (34).

9. The apparatus according to one of claims 1 through 8, **characterized in that** a maceration pump (44) with drive motor (46), a vortex mixer (46) as well as pipe connections are attached outside on the treatment portion (34).

## Revendications

1. Dispositif de traitement d'eaux usées, notamment au bord de barques, avec un tank de traitement qui a une section de réception et une section de traitement, un orifice d'admission pour eaux usées dans la section de réception, un orifice de décharge pour eaux usées traitées sur la section de traitement, qui est raccordé à un orifice d'admission pour eaux usées traitées à destination retour à la section de traitement à travers une pompe de macération, une paroi de séparation avec déversoir étant disposée entre la section de réception et la section de traitement, la section de réception ayant un bassin de décantation pour matières solides et un raccordement pour eau de mer et désinfectants étant pourvu dans la section de traitement, **caractérisé en ce que** une paroi guide (18) est pourvue dans la section de réception (16) dans un écart à l'orifice d'admission supérieur (14) qui finit au-dessus du bassin de décantation (20) et guide l'eau usée entrante au préalable en la direction du bassin de décantation (20), la paroi de séparation (26) forme un réservoir intermédiaire (32) avec une paroi (36) adjacente à la section de traitement (34) dans lequel les eaux usées sont introduits via le déversoir (30), l'autre paroi (36) ayant un deuxième déversoir (38) à destination de la section de traitement (34) et la paroi de séparation (24) étant réalisée comme un clapet qui relie la région inférieure du réservoir intermédiaire (32) avec le bassin de décantation (20) dans sa position d'ouverture.

2. Dispositif selon la revendication 1, **caractérisé en ce que** le bord inférieur du deuxième déversoir (38) est situé un peu au-dessus du bord inférieur du premier déversoir (30).

3. Dispositif selon la revendication 1 ou 2, **caractérisé en ce que** le bassin de décantation est fait en forme d'entonnoir.

4. Dispositif selon l'une quelconque des revendications 1 à 3, **caractérisé en ce que** l'autre paroi (36) aboutit obliquement vers le bas à la paroi de séparation (28).

5. Dispositif selon l'une quelconque des revendications 1 à 4, **caractérisé en ce que** la paroi de séparation est tenue dans sa position de fermeture comme un clapet par la force de pesanteur, en jonction avec la pression hydrostatique de l'espace de réception (16) rempli.

6. Dispositif selon l'une quelconque des revendications 1 à 5, **caractérisé en ce que** le premier déversoir est formé par au moins une section de tube en forme d'U (30), dont les extrémités inférieures sont dirigées vers le bas.

7. Dispositif selon l'une quelconque des revendications 1 à 6, **caractérisé en ce que** le deuxième déversoir est formé par au moins une section de tube (38) angulaire.

8. Dispositif selon l'une quelconque des revendications 1 à 7, **caractérisé en ce que** un capteur est arrangé dans la section de traitement (34), qui détecte si une certaine quantité de liquide est dans la section de traitement (34), afin de l'introduction d'eau de mer et/ou de désinfectant dans la section de traitement (34).

9. Dispositif selon l'une quelconque des revendications 1 à 8, **caractérisé en ce que** une pompe de macération (44) avec moteur d'entraînement (46), un turbomélangeur (46) et des jonctions de tube sont montés sur le dehors de la section de traitement (34).
